Europäisches Patentamt

European Patent Office

Office européen des brevets

(11) Numéro de publication: **0 030 773**
**B1**

(12) **FASCICULE DE BREVET EUROPEEN**

(45) Date de publication du fascicule du brevet: **29.05.85**

(51) Int. Cl.⁴: **G 01 J 5/00**, G 01 N 21/62

(21) Numéro de dépôt: **80201196.5**

(22) Date de dépôt: **15.12.80**

(54) **Dispositif et procédé pour mesurer l'émissivité d'un produit.**

(30) Priorité: **17.12.79 BE 47038**

(43) Date de publication de la demande:
**24.06.81 Bulletin 81/25**

(45) Mention de la délivrance du brevet:
**29.05.85 Bulletin 85/22**

(84) Etats contractants désignés:
**DE FR GB IT LU**

(56) Documents cités:
**BE-A- 839 897**
**CH-A- 537 577**
**GB-A-1 395 797**

(73) Titulaire: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles (BE)**

(72) Inventeur: **Fischbach, Jean-Paul François Rue de la Gotte 22 B-4108 Neupre (BE)**

(74) Mandataire: **Pirmolin, Guy Jean CENTRE DE RECHERCHES METALLURGIQUES 11, rue Ernest Solvay B-4000 Liège (BE)**

EP 0 030 773 B1

## Description

La présente invention est relative à un dispositif et à un procédé pour mesurer sans contact l'émissivité, ou pouvoir émissif, d'un produit qui peut être en mouvement.

Une tell mesure est importante parce que dans toute détermination de température par pyromètre optique travaillant dans une bande spectrale donnée, la conversion du signal délivré par le pyromètre en unités de température ne peut se faire que si l'on connaît l'émissivité du produit dans cette bande spectrale, le signal délivré par le pyromètre étant proportionnel à l'émissivité.

De ce fait, on comprend évidemment que le problème d'obtenir une mesure continue exacte d'une température par un pyromètre optique est d'autant plus difficile qui l'émissivité du produit peut varier au cours du temps par suite de modifications de l'état de surface, de l'oxydation, de la qualité et de la nature du produit, etc.

Il existe plusieurs techniques différentes pour mesurer l'émissivité d'un produit, mais elles présentent généralement les inconvénients d'une grande lenteur, de ne pouvoir être mises en oeuvre qu'en laboratoire, de requérir un échantillonnage avec destruction du produit et souvent de nécessiter un traitement complémentaire du signal obtenu pour connaître l'émissivité recherchée.

Une de ces techniques bien connues est mise en ouevre de la façon suivante.

Une enceinte quasi totalement réfléchissante placée en contact avec une surface constitue un corps noir autour de cette surface. Le corps noir ainsi constitué autour de cette surface a pour effet de rendre la valeur de l'émissivité effective de cette surface très proche de l'unité par suite des réflexions multiples se produisant à l'intérieur de l'enceinte réfléchissante. Soit $V_1$ le signal fourni par un pyromètre situé à l'intérieur de cette enceinte et travaillant dans une bande spectrale λ.

Une enceinte quasi totalement absorbante placée en contact et au même endroit de la même surface ne permet aucune réflexion. Soit $V_2$ le signal fourni par un pyremètre travaillant dans la même bande spectrale λ et situé à l'intérieur d'une telle enceinte absorbante.

L'émissivité de la surface précitée, mesurée dans la bande spectrale λ considérée est fonction du rapport $V_2/V_1$ suivant une loi donnée.

De plus, le signal délivré par le pyromètre situé dans l'enceinte réfléchissante permet d'obtenir la température vraie du produit, indépendamment de son émissivité propre.

La présente invention a pour objet un dispositif permettant de mesurer sans contact l'émissivité d'un produit suivant la technique des deux enceintes, de manière quasi continue. Le produit peut être en mouvement, ce qui permet d'effectuer des mesures en cours de fabrication ou de traitement.

Le dispositif, objet de la présente invention, est exposé dans la revendications 1.

Suivant un mode de réalisation de l'invention, les moyens pour assurer le déplacement du block capteur comportent un mécanisme de vaet-vient à fonctionnement périodique à une cadence prédéterminée. Ces moyens comprennent notamment un système de fin de course destiné à fournir un signal dès que le block capteur a atteint la position de mesure voulue et un système de rappel destiné à ramener le block capteur en position de retrait, de manière à éviter un échauffement des pyromètres.

Suivant un autre mode de réalisation de l'invention, pour assurer la protection des pyromètres, le block capteur comprend encore des moyens de refroidissement par circulation de fluide entre les parois des chambres disposées côte à côte.

Il est à noter de plus que le bloc capteur en forme de double chambre constitue également un moyen de protection mécanique des pyromètres.

Dans le but d'éviter une dégradation de l'état de surface des parois des chambres, le dispositif comprend encore des moyens pour effectuer une purge àl'azote ($N_2$), quand celui-ci est en position de retrait.

Suivant un mode de réalisation de l'invention, le dispositif comprend avantageusement un tube de guidage du support au cours de son déplacement vers le produit à examiner.

Dans l'éventualité d'une mesure à l'intérieur d'une enceinte et en cas de nécessité, le tube de guidage est muni d'une vanne d'isolation de l'équipement de mesure. Cette vanne, dont la commande peut être manuelle, pneumatique ou électrique, permet d'intervenir et éventuellement de démonter l'équipement de mesure ainsi insolé. Dans le cas où une telle intervention est nécessaire, le dispositif comprend un système de sécurité destiné à empêcher le fonctionnement du mécanisme de déplacement du support lorsque la vanne du tube de guidage est fermée.

Egalement suivant un mode de réalisation de l'invention, le tube de guidage est pourvu extérieurement d'une boîte à eau annulaire à l'endroit occupé par les chambres réfléchissante et absorbante lorsqu' elles sont en position de retrait.

La présente invention a également pour objet un procédé pour la mise en oeuvre du dispositif décrit ci-dessus.

Le procédé, objet de la présente invention, est essentiellement caractérisé en ce qu'il comprend les étapes suivantes:

a) on déplace le block capteur muni des deux pyromètres pour l'amener à proximité immédiate ou contre la surface du produit dont on veut mesurer l'émissivité,

b) apre6s un délai correspondant au temps de réponse des pyromètres, on capte les signaux délivrés par les pyromètres, on les mémorise et on les corrige en fonction de facteurs tels que le coefficient de réflectibilité de la chambre réfléchissante et l'écartement entre les deux chambres et le produit,

c) on traite électroniquement les signaux ainsi corrigés pour les convertir en signaux représentatifs de l'émissivité et de la température de la surface examinée. Une telle conversion est effectuée suivant un calcul simple et bien connu en soi.

Dans le cas des hautes températures, cette mesure peut être effectuée de façon quasi continue et dans le cas des basses températures, elle peut être effectuée de façon continue.

Suivant un mode de réalisation de l'invention, l'espace séparant le block capteur et le produit à examiner est aussi réduite que possible. Dans le cas d'un produit immobile, on met avantageusement le block capteur en contact avec le produit.

Egalement suivant l'invention, le moment où le bloc capteur a atteint sa position de mesure est déterminé par un signal émis par un dispositif de mesure de déplacement.

Dès que la mémorisation des signaux délivrés par les pyromètres est terminée, le block capteur est ramené en position de retrait, de manière à éviter un échauffement des pyromètres.

Grâce à la présente invention, on dispose notamment de la possibilité de:

— mesurer sans contact, à une cadence voulue, éventuellement très élevée, l'émissivité d'un produit sortant d'un four de décapage,
— obtenir la température vraie d'un produit indépendamment de son émissivité propre,
— corriger automatiquement le signal délivré en continu par un pyromètre optique travaillant dans les mêmes longueurs d'ondes que celles du capteur.

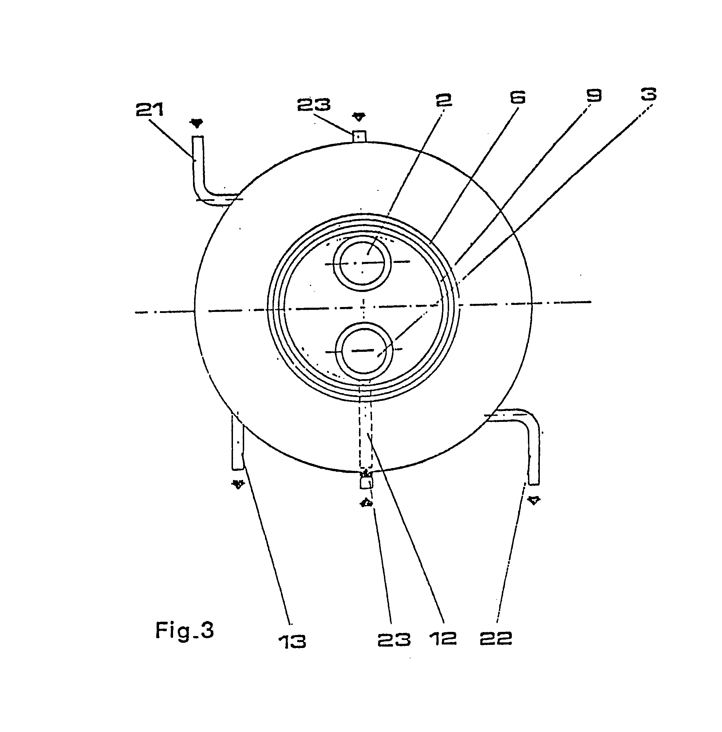

Les figures 1 à 3 données à titre d'exemple non limitatif, représentent schématiquement un mode de construction d'un dispositif conforme à l'invention.

La figure 1 est une coupe suivant un plan horizontal passant par l'axe longitudinal de l'appareil.

La figure 2 est une vue en élévation.

La figure 3 est un détail de la coupe de la figure 1 relativement à la commande du système d'entraînement.

Les mêmes éléments représentés sur les différentes figures sont repérées par les mêmes symboles numériques.

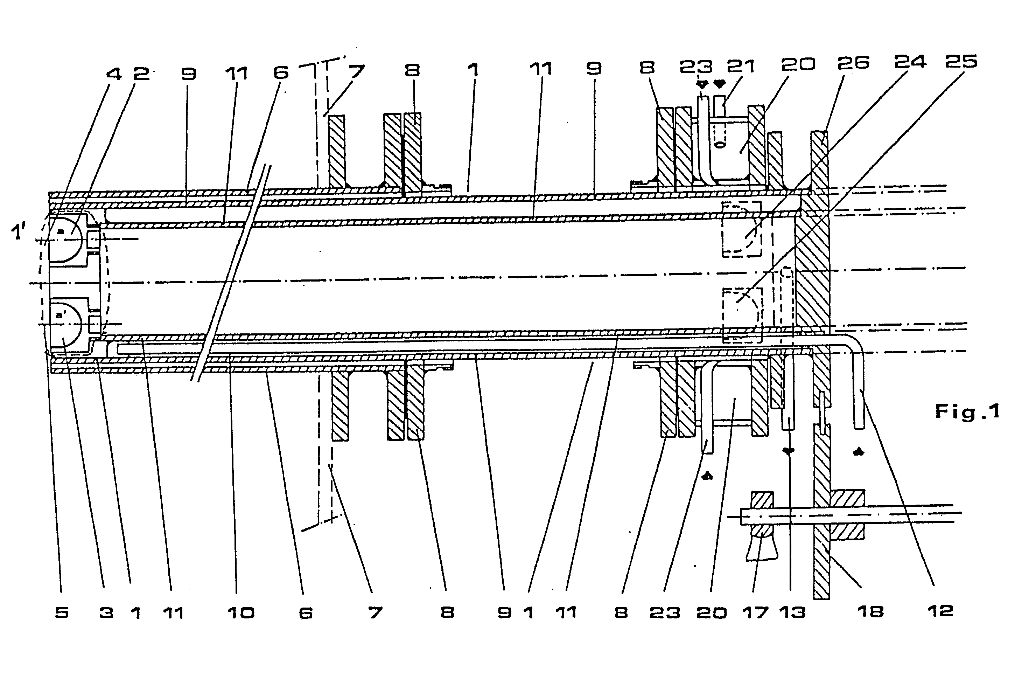

Suivant la figure 1, le dispositif comprend un support 1 mobile muni à son extrémité d'un bloc capteur l'constitué de deux chambres disposées côte à côte, dont l'une 2 est quasi totalement réfléchissante et l'autre 3, quasi totalement absorbante. La paroi 4 de la chambre 2 et la paroi 5 de la chambre 3 sont constituées par le produit dont on veut mesurer l'émissivité.

Le dispositif comprend également deux pyromètres d'axes a et a', non représentés pour la clarté du dessin, à raison de un par chambre, disposés de façon semblable pour scruter le produit à examiner.

Dans le but d'assurer de déplacement du block l'vers produit à examiner, le dispositif comprend encore un tube de guidage 6.

La figure 1 est relative à l'éventualité d'une mesure à l'intérieur d'un four dont est représentée la paroi 7 par où le capteur est introduit. Dans ce cas, le tube de guidage 6 est muni d'une vanne d'isolation 8.

Le support 1 est constitué d'une gaine extérieure 9 avec un tube plongeur 10 pour refroidissement par circulation d'air ou d'eau entre la dite gaine 9 et un longeron tubulaire intérieur 11. L'alimentation de ce tube plongeur est réalisée par l'intermédiaire d'un conduit 12 et l'évacuation se fait par l'intermédiaire du conduit 13.

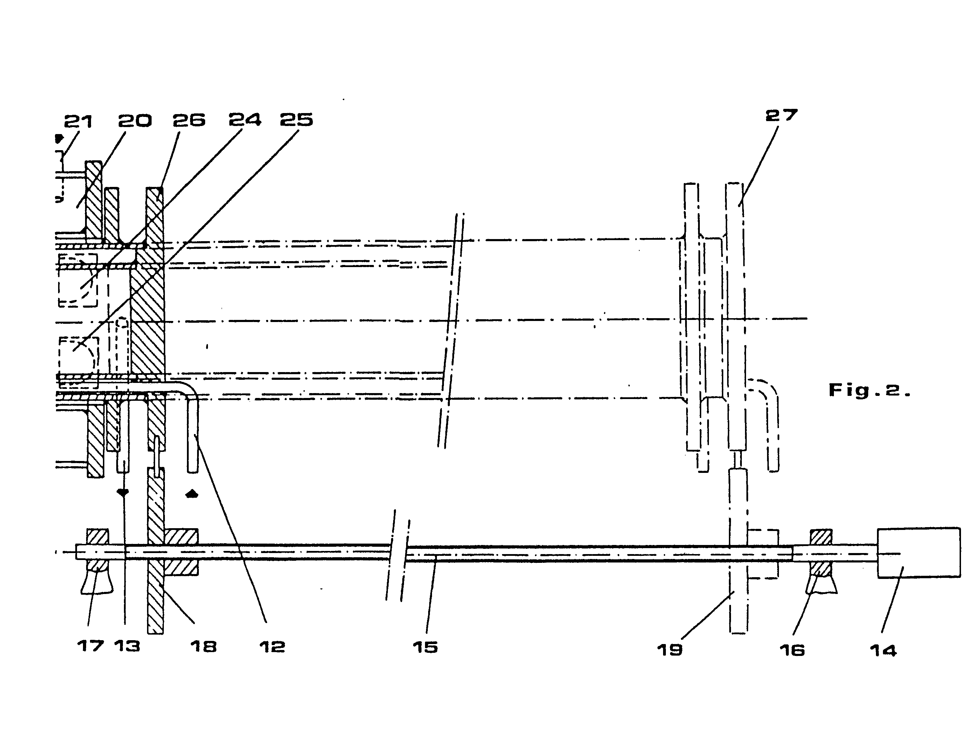

Le mécanisme de va-et-vient à fonctionnement périodique à une cadence prédéterminée est représenté à la figure 2. Ce mécanisme assure le déplacement du bloc capteur l'jusqu'à sa position de mesure, puis à le ramener en position de retrait pour éviter un échauffement des pyromètres. Ce mécanisme comprend essentiellement un moteur de commande 14, un axe de transmission 15 reposant sur les 2 paliers 16 et 17 et un disque d'accouplement 18. Les traits en pointillés 19 représentent la position du disque 18, lorsque le block capteur l'est en position de retrait.

Le tube de guidage 6 de la figure 1 est pourvu extérieurement d'une boîte à eau annulaire 20 à l'endroit occupé par les chambres 2 et 3, lorsqu'elles sont en position de retrait. L'entrée de l'eau est effectuée suivant la flèche 21 et sa sortie suivant la flèche 22.

A proximité de la boîte à eau 20 sont disposés deux conduits 23 d'amenée d'azote pour effectuer une purge destinée à éviter une dégradation de l'état de surface des parois des chambres 2 et 3 en position de retrait (pointillés 24 et 25).

L'extrémité support 1 opposée aux chambres 2 et 3 est pourvue d'un disque d'accouplement 26 destiné à suivre le mouvement imposé par le disque 18 calé sur l'axe 15 du moteur 14.

Les traits en pointillés 27 représentant la situation du disque 26, lorsque les chambres 2 et 3 sont en position de retrait.

**Revendications**

1. Dispositif pour déterminer, éventuellement sans contact, le pouvoir émissif, ou émissivité, d'un produit qui peut être en mouvement, comprenant un bloc dit "capteur" (1') comportant un surface quasi' totalement absorbante et une surface quasi totalement réfléchissante à l'égard du rayonnement émis par le produit, caractérisé en ce que:

(a) chacune des dites surfaces est conformée de façon à former une chambre (2, 3) pouvant être fermée par une paroi (4, 5) constituée par le dit produit;

(b) les deux chambres (2, 3) sont disposées l'une à coté de l'autre et à faible distance l'une de l'autre;

(c) chaque chambre (2, 3) est équipée d'un pyromètre disposé de façon à scruter directement la paroi (4, 5) de la chambre constitué par le dit produit;

(d) sont prévus des moyens (14, 15, 18, 26) pour assurer le déplacement et la mise en place du block capteur (1') à proximité du produit à examiner, ces moyens comprenant un système de fin de course et un système de rappel, ainsi qu'un mécanisme de va-et-vient à fonctionnement périodique à une cadence prédéterminée, ainsi que

(e) des moyens pour corriger et traiter les signaux délivrés par les deux pyromètres, de manière à fournir un signal représentatif du pouvoir émissif du produit concerné.

2. Dispositif suivant la revendication 1, caractérisé en ce qu'il comprend des moyens de refroidissement par circulation de fluide entre les parois des deux chambres (2, 3) et des moyens (23) pour effectuer une purge à l'azote (N₂), lorsque le capteur (1') est en position de retrait.

3. Dispositif suivant l'une ou l'autre des revendications 1 et 2, caractérisé en ce qu'il comporte un support (1) mobile solidaire des deux chambres (2, 3), en ce qu'il comprend d'une part, un tube (6) de guidage du support (1) au cours de son déplacement vers le produit à examiner, ce tube de guidage étant muni d'une vanne d'isolation (8) du dispositif et d'autre part, un système de sécurité destiné à empêcher le fonctionnement du mécanisme de déplacement du support (1) lorsque la vanne (8) du tube (6) de guidage est fermée, et en ce que le tube de guidage est pourvu extérieurement d'une boîte (20) à eau annulaire à l'endroit occupé par les deux chambres, lorsqu'elles sont en position de retrait.

4. Procédé pour la mise en oeuvre du dispositif décrit dans l'une ou l'autre des revendications 1 à 3, caractérisé en ce qu'il comprend les étapes suivantes:

a) on déplace le block capteur (1') muni des deux pyromètres pour l'amener à proximité immédiate ou contre la surface de produit dont on veut mesurer l'émissivité,

b) après un délai correspondant au temps de réponse des pyromètres, on capte les signaux délivrés par les pyromètres, on les mémorise et on les corrige en fonction de facteurs tels que le coefficient de réflectibilité de la chambre réfléchissante et l'écartement entre les deux chambre et le produit,

c) on traite électroniquement les signaux ainsi corrigés pour les convertir en signaux représentatifs de l'émissivité et de la température de la surface examinée.

5. Procédé suivant la revendication 4, caractérisé en ce que on détermine le moment où le bloc capteur (1') a atteint sa position de mesure par un signal émis par un dispositif de mesure de déplacement et en ce que, dès que la mémorisation des signaux délivrés par les pyromètres est effectuée, on ramène le bloc capteur en position de retrait, de manière à éviter un échauffement des pyromètres.

**Patentansprüche**

1. Vorrichtung zum gegebenenfalls berührungslosen Bestimmen des Emissionsvermögens oder Emissiongrades eines Produktes, das sich in Bewegung befinden kann, bestehend aus einem als "Meßzelle" (1') bezeichneten Block mit einer für die von dem Produkt ausgesandte Strahlung praktisch vollständig absorbierenden Oberfläche und einer praktisch vollständig reflektierenden Oberfläche, dadurch gekennzeichnet, daß

(a) jede der beiden genannten Oberflächen derart ausgeführt ist, daß eine Kammer (2, 3) gebildet wird, die durch eine Wand (4, 5) geschlossen werden kann, die durch das genannte Prodjkt gebildet wird;

(b) die beiden Kammern (2, 3) in geringem gegenseitigen Abstand angeordnet sind;

(c) jede Kammer (2, 3) mit einem Pyrometer ausgestatter ist, das so angeordnet ist, daß unmittelbar die Kammerwand (4, 5) untersucht wird, die durch das genannte Produkt gebildet ist;

(d) Mittel (14, 15, 18, 26) vorgesehen sind, um die Verlagerung und das Aufstellen des Meßzellenblocks (1'), in der Nähe des zu untersuchenden Produktes zu gewährleisten, wobei diese Mittel ein Endlagensystem und ein Rückstellsystem umfassen sowie einen mit vorbestimmter zeitlicher Folge periodisch arbeitenden Mechanismus för die Hin- und Herbewegung, und daß

(e) eine Einrichtung zum Korrieren und zum Verarbeiten der von den beiden Pyrometern abgegebenen Signale vorgesehen ist, damit ein Signal erzeugt wird, das kennzeichnend für das Emissionsvermögen des betreffenden Produktes ist.

2. Vorrichtung nach Anspruch 1, dadurch gekennzeichnet, daß Kühlmittel zum Kühlen durch Umwälzen von Fluidum zwischen den Wänden der beiden Kammern (2, 3) vorgesehen sind sowie eine Einrichtung (23) zum Herbeiführen einer Spülung mit Stickstoff (N₂), wenn die Meßzelle (1') sich in der zurückgenommenen Stellung befindet.

3. Vorrichtung nach Anspruch 1 oder 2, dadurch gekennzeichnet, daß sie ein mit den beiden Kammern (2, 3) starr verbundenes Halteglied (1) aufweist, daß sie einerseits ein Führungsrohr (6) für das Halteglied (1) bei seiner Verschiebung in Richtung auf das zu untersuchende Produkt aufweist, welches Führungsrohr mit einem Schieber (8) zur Trennung von der Vorrichtung ausgestattet ist, und andererseits ein Sicherungssystem, das das Arbeiten des Mechanismus zum Verschieben des Haltegliedes (1) verhindern soll, wenn der Schieber (8) des Führungsrohrs (6) geschlossen ist, und daß das Führungsrohr außerhalb eines ringförmigen Wasserkastens (20) an der Stelle vorgesehen ist, die von den beiden Kammern eingenommen wird, wenn sie sich in der zurückgenommenen Stellung befinden.

4. Verfahren zur Anwendung der Vorrichtung nach einem der Ansprüche 1 bis 3, dadurch gekennzeichnet, daß folgende Schritte nacheinander vollzogen werden:

(a) die mit zwei Pyrometern versehene Meßzelle (1') wird verschoben, um sie in unmittelbare Nähe oder gegen die Oberfläche des Produktes zu führen, dessen Emissionsvermögen gemessen werden soll,

(b) dann werden nach einer der Ansprechzeit der Pyrometer entsprechenden Wartezeit die von de Pyrometern abgegebenen Signale aufgenommen, sie werden gespeichert und werden in Abhängigkeit von Faktoren, wie etwa dem Reflexionskoeffizienten der reflektierenden Kammer und dem Abstand zwischen den beiden Kammern und dem Produkt, korrigiert,

(c) dann werden die derart korrigierten Signale elektronisch verarbeiter, um die in Signale unzuwandeln, die für das Emissionsvermögen und die Temperatur der untersuchten Oberfläche kennzeichnend sind.

5. Verfahren nach Anspruch 4, dadurch gekennzeichnet, daß der Zeitpunkt, in dem der Meßzellenblock (1') seine Meßstellung erreicht hat, durch ein Signal bestimmt wird, das von einer Wegemeßvorrichtung abgegeben wird, und daß der Meßzellenblock, sobald die Speicherung der von den Pyrometern abgegebenen Signale vollzogen ist, in die zurückgenommene Stellung geführt wird, um eine Erwärmung der Pyrometer zu verhindern.

**Claims**

1. A device for determining, eventually without contact, the emissive power (or emissivity) of a product which may be moving, comprising a "sensor" unit (1') which includes a surface almost fully absorbent and a surface almost totally reflective with regard to the radiation emitted by the product, characterised in that:

a) each of the said surfaces is shaped so as to form a chamber (2, 3) which can be sealed off by a wall (4, 5) formed by the said product;

b) the two chambers (2, 3) are set up side by side and a small distance apart;

c) each chamber (2, 3) is provided with a pyrometer arranged in such a way as to effect direct scanning of the wall (4.5) of the chamber formed by the said product;

d) means (14, 15, 18, 26) are provided for moving and positioning the sensor unit (1') close to the product to be examined, these means embodying an end-of-travel system and a return system, as well as a to-and-fro mechanism functioning cyclically at a predetermined rate, and also

e) means of correcting and processing the signals given by the two pyrometers, in order to provide a signal representative of the emissive power of the product concerned.

2. A device in accordance with Claim 1, characterised in that it includes means of cooling by fluid circulation between the walls of the two chambers (2, 3) and means (23) of carrying out purging by nitrogen ($N_2$) when the sensor (1') is in the withdrawn position.

3. A device in accordance with either of Claims 1 and 2, characterised in that it comprises a movable support (1) integral with the two chambers (2, 3) embodying, on the one hand a tube (6) for guiding the support (1) during its movement towards the product to be examined, this guide tube being fitted with a valve (8) for isolating the device, and on the other hand, a safety system intended to prevent the mechanism for moving the support (1) from operating when the valve (8) of the guide tube (6) is closed, and in that the guide tube is fitted with an annular outer water jacket (20) at the place occupied by the two chambers when they are in the withdrawn position.

4. Procedure for operating the device described in one or other of Claims 1 to 3, characterised in that it comprises the following stages:

a) the sensor unit (1') equipped with the two pyrometers is moved to bring it into the immediate proximity of or up against the surface of the product whose emissivity it is wished to measure;

b) after a delay corresponding to the response time of the pyrometers, the signals given by the pyrometers are picked up, memorised, and corrected with respect to factors such as the coefficient of reflectivity of the reflecting chamber and the distance between the two chambers and the product;

c) the signals thus corrected are processed electronically to convert them into signals representative of the emissivity and temperature of the surface examined.

5. Procedure according to Claim 4, characterised in that the determination is made of the moment at which the sensor unit (1') has reached its measuring position, from a signal emitted by a movement measuring device and in that, after memorisation has been made of the signals given by the pyrometers, the sensor unit is brought back to the withdrawn position, so as to avoid overheating of the pyrometers.

**Fig.1**

0 030 773

Fig.2.

14 16 19 15 12 18 17 13 27 21 20 26 24 25

Fig.3